# EUROPEAN PATENT SPECIFICATION

(11) **EP 2 337 461 B1**
(45) Date of publication and mention of the grant of the patent: **28.01.2015**
(21) Application number: 09808463.5
(22) Date of filing: 20.08.2009
(51) Int. Cl.: A23L 1/303, A23L 1/28

(54) **METHOD TO VITAMIN-D ENRICH FOOD USING YEAST AND UV LIGHT**
VERFAHREN ZUR ANREICHERUNG VON NAHRUNGSMITTELN MIT VITAMIN D UNTER VERWENDUNG VON HEFE UND UV-LICHT
PROCÉDÉ D ENRICHISSEMENT D ALIMENT EN VITAMINE D UTILISANT DE LA LEVURE ET UNE LUMIÈRE ULTRAVIOLETTE

(30) Priority: 21.08.2008 SE 0801820
(43) Date of publication of application: 29.06.2011
(73) Proprietor: Viasolde AB, 262 63 Ängelholm (SE)
(72) Inventor: EKLUND-JONSSON, Charlotte, S-449 90 Nol (SE); JOHANSSON, Sara, S-416 63 Göteborg (SE); HJORTMO, Sofia, S-422 56 Hisings Backa (SE); LINDQVIST, Helen, S-427 40 Billdal (SE)
(74) Representative: Ahlberg, Lena Camilla
(86) International application number: PCT/SE2009/050942
(87) International publication number: WO 2010/021590

(56) References cited:
- CN-A- 101 057 658
- FR-A- 1 000 200
- FR-A- 1 521 659
- US-A1- 2008 138 469
- Anna-Mari Natri,: "Bread fortified with cholecalciferol increases the serum 25-hydroxyvitamin D concentration in women as effectively as a cholecalciferol supplement.", The journal of nutrition, 1 January 2006 (2006-01-01), pages 123-127, XP055076926, Retrieved from the Internet: URL:http://jn.nutrition.org/content/136/1/ 123.full.pdf+html [retrieved on 2013-08-28]
- DATABASE WPI Week 199705, Derwent Publications Ltd., London, GB; AN 1997-045816, XP008110211 & JP 8 298 981 A (ASAHI BREWERIES LTD) 19 November 1996
- KAWAZOE T.: 'Efficient transformation of ergosterol to vitamin D-2 by ultraviolet light irradiation' JOURNAL OF THE JAPANESE SOCIETY FOR FOOD SCIENCE AND TECHNOLOGY vol. 42, no. 4, 1995, pages 262 - 267, XP008136565 & DATABASE BIOSIS [Online] 30 January 2009 Database accession no. PREV199598311933

## Description

### TECHNICAL FIELD

The invention relates to a method for enrichment of foodstuffs containing ascomycota such as yeasts with vitamins.

### BACKGROUND ART

Vitamin D is a fat-soluble vitamin that in humans amongst other things regulates the levels of calcium and phosphorus in the blood and regulates the mineralization of the skeleton. Together with sunlight (UVB) the vitamin D₃, a form of vitamin D, can be formed in the skin of the human from the provitamin 7-Dehydrocholesterol.

The provitamin converts to the previtamin D₃ after exposure to ultraviolet light, the previtamin is then further transformed to the physiologically active vitamin D₃ with the aid of heat. Vitamin D₃ may also be received from various food stuffs and especially animal food stuffs such as fish, cooking fat, eggs, dairy products and meat.

In fungi, for instance in yeast, ergosterol functions as a provitamin and can with the aid of ultraviolet light and heat be transformed into vitamin D₂. Vitamin D₂ is just as vitamin D₃ physiologically active in the human body.

As vitamin D is important for the intercalation of calcium in the skeleton it has been shown that a lack of vitamin D involves an increased risk of osteoporosis. In later years it has also been shown that an adequate intake of vitamin D may reduce the risk of developing other diseases, such as colon and breast cancer, cardiovascular disease, multiple sclerosis, psoriasis and diabetes.

During periods when not enough sunlight is present to produce vitamin D in the skin, for instance during the winter season in northern latitudes, older people and people with darker skin above all run a great risk of not receiving enough vitamin D. The diet is then of great importance as a source of vitamin D. Vegetarians and vegans that do not receive vitamin D from their diet have to rely solely on dietary supplements.

FR1000200A discloses a method wherein is submitted to UV light with wavelengths between 260-300 nm during the preparation of the bread. Ergosterol is converted to vitamin D₂ during irradiation of an aqueous solution comprising yeast, salt and wheat grain protein.

FR1521659A discloses a method for vitamin D enrichment of feed, wherein yeast is submitted to UV light to transform pro-vitamin D into vitamin D.

Ann-Mari Natri discloses in "Bread fortified with cholecalciferol increases the serum 25-hydroxyvitamin D concentration in women as effectively as a cholecalciferol supplement." The Journal of nutrition, 1 January 2006 (2006-01-01), pages 123-127, XP055076926, a method for making fortified bread involving the direct addition of cholecalciferol as a powder.

US2008/138469A1 discloses a method where yeast is submitted to UV light and is rendered fortified for vitamin D₂ due to the conversion of ergosterol. This vitamin D₂ enriched yeast can be used in bread making, being added to the dough.

JP8298981 A discloses yeast suspended in water pior to being irradiated, transforming the ergosterol present in said yeast to vitamin D₂.

Kawazoe T discloses in "Efficient transformation of ergosterol to vitamin D-2 by ultraviolet light irradiation", Journal of the Japanese Society For Food Science and Technology, vol.42, no.4, 1995, pages 262-267, XP008136565 irradiation of different types of fungi, yeast and moulds and the transformation of ergosterol present therein to vitamin D₂.

CN101057658A discloses irradiation of mushrooms for vitamin enrichment.

However, there is a need to supply foodstuffs able to give an addition of vitamin D especially to the individuals that have difficulties covering the need of vitamin D with an ordinary diet. One aim of the invention is therefore to provide such foodstuffs that are vegetarian and easily accessible. Another aim of the invention is to offer foodstuffs with an increased amount of vitamin D without particular enrichment additives of vitamin since many consumers are sceptical towards additives in foodstuffs.

### SUMMARY OF THE INVENTION

According to the invention a method has now been developed for enriching foodstuffs containing ascomycota such as yeast with vitamins. The method according to the invention is mainly characterized in that ergosterol in foodstuffs is converted into vitamin D₂ through the foodstuff being placed under a source of ultraviolet light and the foodstuff being illuminated with ultraviolet light with a wavelength of between 100-400 nm and in that the foodstuff is bread baked from rising dough.

It has been shown that good results are achieved with a light source that during the illumination step is placed at a distance of between 0-2 m from the foodstuff.

One type of foodstuffs that are suitable for treatment with the method according to the invention is bread baked on rising dough, since such bread contains yeast and thus also ergosterol that can be converted into vitamin D.

The bread is preferably portion-packed bread, as such bread offers a large exposed and illuminable surface relative to its volume. Especially suitable portion-packed bread are round loaves, for instance rye loaves.

It has been shown that the temperature at which the foodstuff is illuminated with ultraviolet light is of lesser importance. It is possible to obtain an increased level of vitamin D₂ in a foodstuff containing yeast at temperatures over 10 °C. However, products with a temperature below 10 °C can also obtain an increased level of vitamin D₂ through the surface layer being heated during illumination.

To achieve suitable levels of vitamin D in the foodstuff it is sufficient to illuminate the foodstuff for a relatively short period of time. The illumination time can be 0.1 - 60 seconds, preferably 2-30 seconds and more preferably 3-5 seconds. Short illumination times are especially suitable for continuous processes, for instance as bread or another foodstuff is brought forward on a conveyor belt and is allowed to pass under a light source.

The illumination time can advantageously be adjusted so that the foodstuff is treated to a predetermined amount of vitamin D₂, for instance to an amount corresponding to 30 % of a recommended daily intake per serving of the foodstuff. The illumination time may preferably be adjusted to reflect any changes made to the recommended daily intake as a result of new research findings or recommendations from a public authority.

The method according to the invention is preferably applied to a continuous process where the foodstuff is transported past the source of ultraviolet light at a speed adjusted to reach a predetermined level of illumination and thus a predetermined level of vitamin D in the foodstuff. The illumination time is determined in a continuous process partly by the speed of the conveyor belt, partly by the amount of light per surface unit that is delivered. It is alternatively possible to illuminate foodstuffs in a non-continuous process for a specific period of time.

Some of the wavelengths within the mentioned interval 100-400 nm also have anti-microbial effects, for instance 254 nm. This leads to unwanted microorganisms being eliminated at the same time as vitamin D₂ is formed.

### DESCRIPTION OF THE INVENTION

Conversion of ergosterol to vitamin D₂ takes place according to the following simplified chemical equation.

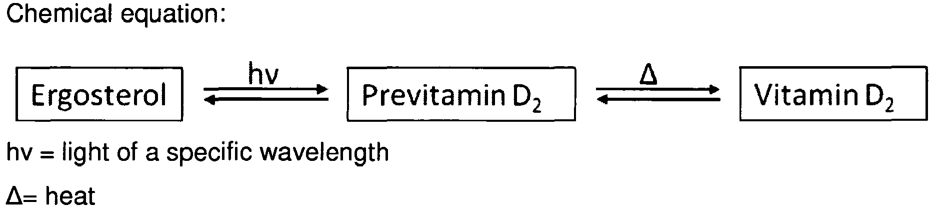

Bread containing yeast, and thus also ergosterol, can be illuminated with ultraviolet light and thereby receive an increased level of vitamin D₂.

Bread containing ergosterol is illuminated according to the invention with ultraviolet light which leads to the formation of vitamin D₂. Vitamin D₂ is formed during illumination of ultraviolet light with wavelengths between 100-400 nm, at a distance of 0-2 m, at temperatures over 10 °C.

The advantages with a bread that contains vitamin D₂ is that a large number of consumers can receive their daily amount of vitamin D even during the winter season when the amount of sunlight in the Nordic countries is insufficient to form vitamin D in the skin. This is especially advantageous to vegetarians and vegans who do not eat fish, eggs or meat, foodstuffs that are rich in vitamin D. Since vegans also do not eat dairy products, which in Sweden are enriched with vitamin D, this group derives particular advantage from a bread rich in vitamin D. Also older people and people with darker skin benefit from this invention since it is more difficult for them to produce vitamin D in the skin. Groups that also may take advantage of bread enriched with vitamin D are people that are allergic to milk or that are lactose intolerant. Also pregnant and breastfeeding women need an increased addition of vitamin D since both their own and the foetus' or baby's need of vitamin D has to be met.

The invention thus admits that it is possible in a simple and natural way to increase the amount of vitamin D in foodstuffs containing ascomyceta such as yeast. Initial studies have shown that vegetarian products based on *Fusarium venenatum* are also suitable to enrich with vitamin D by the aid of ultraviolet light.

The level of vitamin D₂ obtained after exposure to ultraviolet light is dependent on the content of fungi and the shape of the product (i.e. the size of the exposed surface in relation to the volume) and will thus vary. The conversion of ergosterol to vitamin D₂ in products containing *Fusarium venenatum* during illumination with ultraviolet light is very effective since the amount of ergosterol is high.

Due to the fact that ultraviolet light converts the ergosterol in the fungus to vitamin D, no additives are needed in the foodstuff. This is an advantage, both since consumers may be sceptical to additives in foodstuffs and since enrichment of foodstuffs such as bread is difficult and affects recipes and the number of ingredients in the foodstuff. With the illumination with ultraviolet light the amount of vitamin D in the foodstuff can be increased without having to change the manufacturing process to an appreciable extent. The ultraviolet equipment can easily be incorporated into a continuous manufacturing line producing for instance round loaves or other foodstuffs.

The recommended daily dosage of vitamin D₂ is at present 7.5 µg per day for adult, healthy individuals. A higher dosage of 10 µg is recommended for the elderly, children and individuals spending most of their time indoors.

In order to avoid overdoses it is therefore suitable that the dosage of vitamin D₂ per serving of the foodstuff is below approximately 7.5 µg. An example of a suitable size of a serving of bread can be 1-3 pieces of bread. An advantage with the invention is that the illumination time can be adjusted to reflect changes in the recommended daily intake as a result of new research findings or recommendations from a public authority.

Today's stressful lifestyle also affects the development of the foodstuffs market and increases the proportion of fast food and easy cooked food. Many of these products are bread based, such as typical fast food accompaniments, for instance hot dog rolls or hamburger bread. The demands on the nutritional content of the diet, and above all the nutritional density, increase more and more because we move less and due to this we cannot eat the same quantities of food as a person with high physical activity. Therefore, higher demands are also placed on fast food. The vitamin enrichment method according to the invention is of course especially suitable also for bread that is a part of fast food, such as hot dog rolls, hamburger bread, pita bread or similar.

The ultraviolet rays only penetrate a short distance into the bread, which means that only a superficial layer gets elevated levels of vitamin D. It is therefore suitable to illuminate bread that has a large exposed surface in relation to volume, for instance round loaves, such as rye loaves or other types of portion-packed bread. The above mentioned fast food breads of course fall into this category.

For round loaves with a large exposed surface it has been shown that a sufficient amount of vitamin D₂ is achieved already at relatively short illumination times of a few seconds. Illumination times of 0.1-60 seconds, preferably 2-30 seconds and more preferably 3-5 seconds are generally enough for this type of foodstuffs.

Some of the wavelengths within the mentioned interval 100-400 nm also have anti-microbial effects, for instance 254 nm. This leads to unwanted microorganisms being eliminated at the same time as vitamin D₂ is formed.

Since the ultraviolet fluorescent lamps lose effect over time it is suitable that they are exchanged after half of the manufacturer's recommended life length of the lamp. This is done in order to secure correct and even amounts of vitamin D in the treated foodstuff.

### DESCRIPTION OF FIGURES

The invention will in the following section be more thoroughly described with reference to the figures in the attached drawings.

In this respect:
Figure 1 shows an illumination device on a laboratory scale for illumination of bread according to the invention.
Figure 2a and b shows an upscaled prototype of the illumination device for illumination of bread according to the invention.
Figure 3 shows a diagram over the amount of vitamin D in relation to the illumination time and different wavelengths for illumination of different types of bread.
Figure 4 shows a diagram over the amount of vitamin D in relation to illumination time for illumination of different types of bread.
Figure 5 shows a staple diagram over the amount of vitamin D in rye loaves of different temperatures after illumination with ultraviolet light.
Figure 6 shows a staple diagram over the amount of vitamin D in rye loaves of different temperatures before illumination with ultraviolet light.
Figure 7 shows a diagram over the amount of vitamin D in rye loaves in relation to illumination time for extremely long illumination times.
Figure 8 shows a diagram over the amount of vitamin D in relation to illumination time for a foodstuff containing *Fusarium venenatum.*

### DETAILED DESCRIPTION

### Equipment

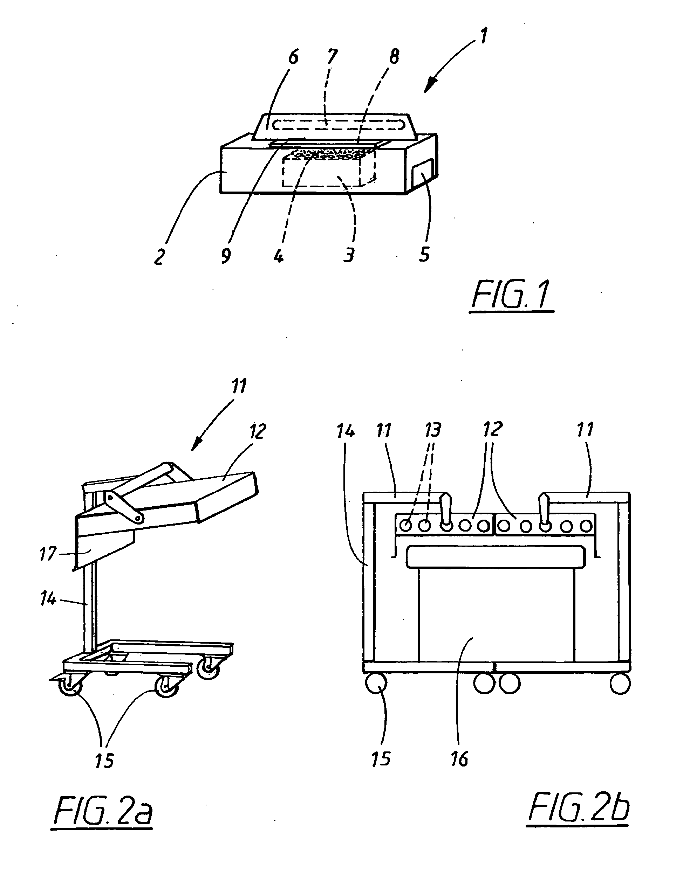

For the purpose of examining suitable illumination times among other things, stationary tests on a laboratory scale were conducted on foodstuffs containing ascomyceta such as yeast or the mould *Fusarium venenatum* with the aid of the illumination device shown in Figure 1. The illumination device 1 comprises a light-proof illumination box 2 in which a test platform 3 is arranged. The test platform 3 is accessible for placement of a sample 4, for instance a round loaf through a hatch 5 in the wall of the illumination box 2. A lamp hood 6 containing ultraviolet lamps is placed over the illumination box 2 for illumination of a sample 4 arranged on the test platform 3. The illumination box has an opening 8 over the test platform 3, which opening can be closed with the aid of a plate that functions as a shutter 9.

During the tests the ultraviolet lamps are lit and the sample 4 is placed on the test platform 3 through the hatch 5 in the wall of the illumination box 2. The shutter 9 is thereafter removed whereupon the sample 4 is exposed to the ultraviolet light. After the illumination time expires the shutter 9 is put back into place, the sample 4 is removed through the hatch 5 and the ultraviolet lamps are switched off.

For use of the invention in a continuous process, equipment similar to the equipment shown in Figure 2a and 2b can, for example, be used. The illumination device 11 shown in Figures 2a and 2b comprises a lamp holder 12 with ultraviolet fluorescent lamps protected by a quartz glass 10. The lamp holder 12 is mounted on a stand 14 that is equipped with wheels 15 so that it is easily movable, for instance for different placements or for cleaning. The lamp holder 12 is also equipped with a light-proof screen 17 mounted in such a way that it prevents illumination of ultraviolet light from the ultraviolet lamps to the sides.

In Figure 2b two illumination devices 11 are shown placed on each side of a conveyor belt 16 on which the foodstuff that is to be illuminated is transported. The lamp holders' 12 light-proof screens 17 are arranged parallel to the side edges 16 of the conveyor belt and form together with the lamp holders 12 a screened light tunnel over a section of the conveyor belt 16, as shown in the figure.

Through a device such as the one shown in Figure 2, it is possible to easily illuminate foodstuffs containing yeast fungi or the mould *Fusarium venenatum* as a step in the manufacturing process. The illumination can be performed without any major modifications to the existing manufacturing equipment, which is a considerable advantage of the invention. The treatment according to the invention does not affect the manufacturing process in any other aspect, nor does it have any negative effect on properties such as taste, consistency or appearance of the finished foodstuff.

The baked breads or a foodstuff containing *Fusarium venenatum* are transported into the light tunnel and are illuminated for 3-5 seconds whereupon they are transported on, possibly for packaging. In the suitably vertically adjustable lamp holders 12 the fluorescent lamps 13 are placed parallel to the running direction of the conveyor belt 16. The two illumination parts are suitably locked together with a simple locking arrangement arranged between the lamp holders 12.

### Example 1

Rye loaves (weight: approximately 34 g, thickness: approximately 1 cm, diameter: approximately 12 cm) were illuminated with ultraviolet light at a distance of 2,5 cm during four different time periods: 2 seconds, 4 seconds, 8 seconds and 12 seconds. Two ultraviolet lights with different wavelengths were tested: one shortwave (254 nm) and one midrange (302 nm).

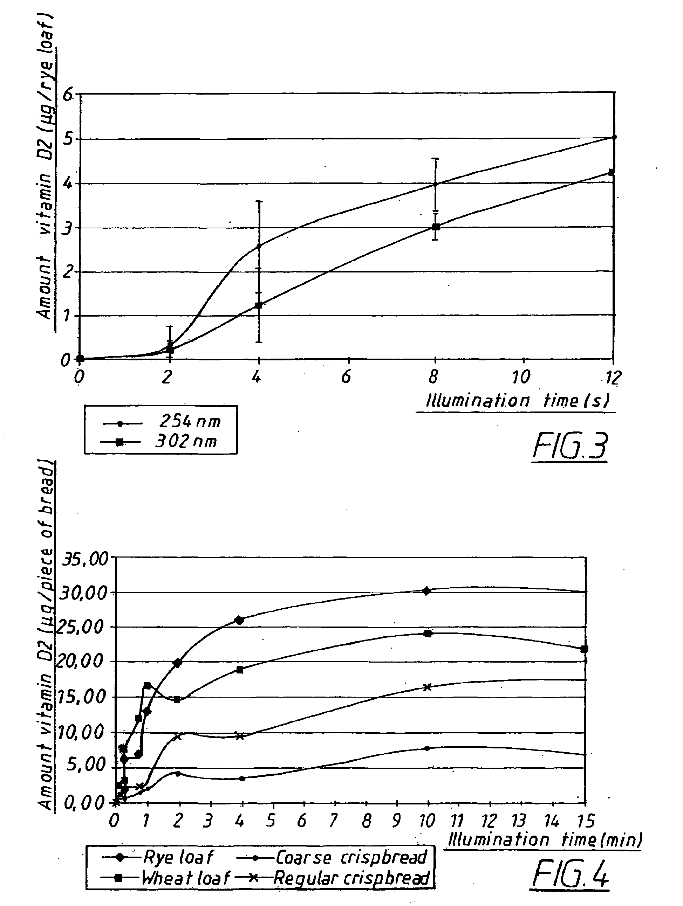

The results of the measurements are shown in table 1 and are illustrated in the diagram in Figure 3.

**Table 1. Amount of vitamin D₂ in rye loaf illuminated with 254nm and 302nm**

| Wavelength | Time (s) | Amount of vitamin D₂ (µg per rye loaf) |
|---|---|---|
| | 0 | 0,00 |
| 254nm | 2 | 0,33 |
| | 4 | 2,57 |
| | 8 | 3,97 |
| | 12 | 5,01 |
| 302nm | 2 | 0,24 |
| | 4 | 1,24 |
| | 8 | 3,03 |
| | 12 | 4,23 |

### Example 2

A comparison of the amount of vitamin D₂ was made for four different types of bread: wheat loaves, rye loaves, coarse crispbread and regular crispbread.

The results are shown in table 2 and are illustrated in the diagram in Figure 4

**Table 2. Comparison of the amount of vitamin D₂ in different kinds of bread after illumination with ultraviolet light of 302 nm.**

| | **Amount of vitamin D₂ (µg per g of piece of bread)** | | | |
|---|---|---|---|---|
| **Time** | **Rye loaf** | **Wheat loaf** | **Coarse crisp bread** | **Regular crisp bread** |
| **Os** | 0,00 | 0,00 | 0,00 | 0,00 |
| **2s** | 0,43 | 0,00 | 0,88 | 0,19 |
| **4s** | 0,93 | 2,18 | 0,00 | 0,56 |
| **8s** | 1,60 | 3,10 | 0,56 | 0,46 |
| **16s** | 1,99 | 2,91 | 0,39 | 0,39 |
| **30s** | 6,21 | 7,44 | 1,02 | 2,22 |
| **45s** | 6,78 | 11,84 | 1,42 | 2,33 |
| **60s** | 12,90 | 16,73 | 1,90 | 2,87 |
| **2min** | 14,58 | 19,81 | 4,22 | 9,70 |
| **4min** | 26, 11 | 18,98 | 3,48 | 9,60 |
| **10min** | 30,38 | 24,02 | 7,77 | 16,44 |
| **15min** | 30,10 | 21,78 | 7,31 | 17,43 |

The results indicate that the amount of vitamin D₂ was greatest in rye cakes after illumination for 15 minutes. The lowest amount was obtained in coarse crispbread. However it seems that the amount of D₂ in illuminated wheat cakes increased the fastest with increased illumination times.

A comparison of the time required for the different kinds of bread to reach an amount of 7 µg of vitamin D₂ showed that the wheat cakes needed approximately 30 seconds, the rye cakes needed approximately 45 seconds, regular crispbread needed approximately 1.5 minutes and coarse crispbread needed approximately 10 minutes.

### Example 3

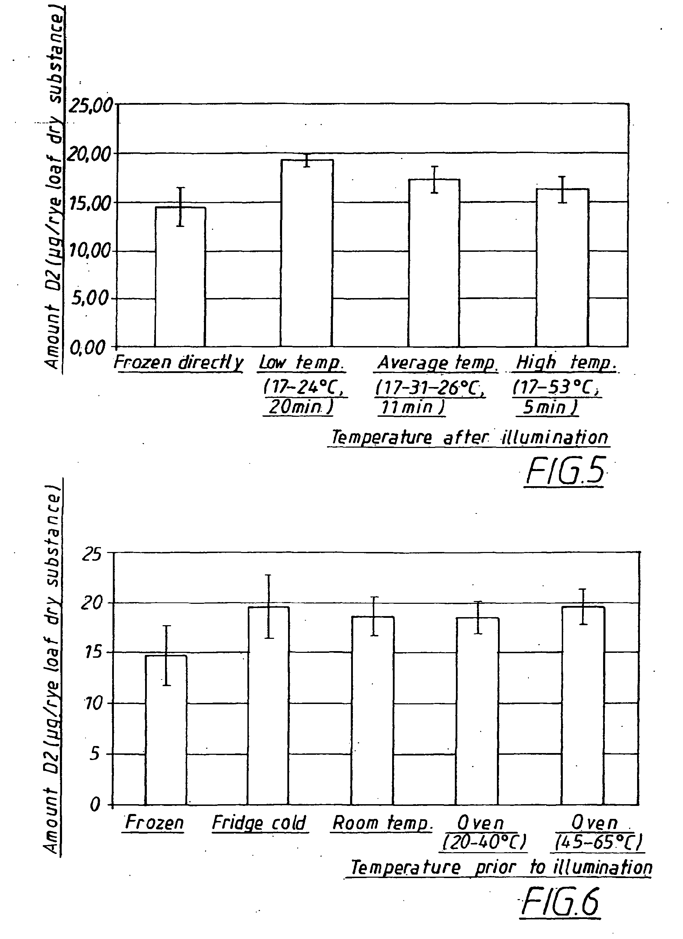

In order to determine how different temperatures after illumination influence the formation of vitamin D₂, rye loaves were exposed to different temperatures after illumination with ultraviolet light of 302 nm. The illumination time was 2 minutes for each loaf. The results are shown in table 3 and in the diagram in Figure 5.

**Table 3. Temperature of the rye loaves after illumination**

| | **Description** | | **T _{after} illumination** | **T _{after} oven** | **T _{after} room temperature** |
|---|---|---|---|---|---|
| High temperature | 5 min oven 100 °C | A | 18°C | 50,9 °C | - |
| | | B | 17 °C | 56°C | - |
| Medium temperature | 1 min oven 100°C, room temperature for 10 min | A | 17 °C | 29,6°C | 26,2°C |
| | | B | 17 °C | 32,4°C | 26,4°C |
| Low temperature | 20 min room temperature | A | 18°C | - | 26°C |
| | | B | 17°C | - | 22,3°C |
| Frozen directly | Frozen directly after illumination | A | 17°C | - | - |
| | | B | 17°C | - | - |

The results show that there is a slight reduction in the amount of vitamin D₂ in rye loaves if the bread is frozen directly after illumination. The highest amount was obtained when the breads first were placed in room temperature for 20 minutes and then frozen.

### Example 4

In order to determine how different temperatures prior to illumination influence the formation of vitamin D₂, rye loaves were exposed to different temperatures prior to illumination of ultraviolet light, see table 4. The illumination time was 2 minutes at 302 nm for each loaf. The results are shown in table 5 and in the diagram in Figure 6.

**Table 4. Table showing the different temperatures for the different rye loaves**

| **Designation** | **T ᵢₙᵢₜᵢₐₗ** | **T _{after illumination}** | **Other information** |
|---|---|---|---|
| Frozen A | -8,5 °C | -6,0°C | |
| Frozen B | -9,8°C | -6,8°C | |
| Fridge cold A | 9,4°C | 13,4°C | |
| Fridge cold B | 9,8°C | 12,3°C | |
| Room temp A | 17,8°C | 18,7°C | |
| Room temp B | 20,7°C | 20,7°C | |
| Oven A | 33,0 °C | 27,5 °C | 1 minute at 100°C prior to illumination |
| Oven B | 24,0°C | 23,7°C | 1 minute at 100°C prior to illumination |
| Oven C | 52,5°C | 42,4°C | 1 minute at 200°C prior to illumination |
| Oven D | 43,9°C | 36,8°C | 1 minute at 200°C prior to illumination |
| Oven E | 70,3°C | 54,1°C | 2 minutes at 200°C prior to illumination |
| Oven F | 63,9°C | 50,1°c | 2 minute at 200°C prior to illumination |

**Table 5. Average value of the amount of vitamin D₂ in rye loaf with different temperatures prior to illumination**

| Temperature prior to illumination | Amount of vitamin D₂ (µg per bread) |
|---|---|
| Frozen | 14.72 |
| Fridge cold | 19,58 |
| Room temperature | 18,65 |
| Oven (20-40°C) | 18,53 |
| Oven (20-40°C) | 19,59 |

The results show that there are no great variations in the amount of vitamin D₂ in the rye loaves after illumination regardless of the initial temperature.

On the other hand, the formation of vitamin D₂ did not seem to be favoured if the rye loaves were frozen during illumination with ultraviolet light. However, an increase in the amount of vitamin D₂ is also shown during treatment of frozen loaves. The reason for this is assumed to be that the surface layer of the bread becomes sufficiently hot in order for the vitamin transformation to occur.

### Example 5

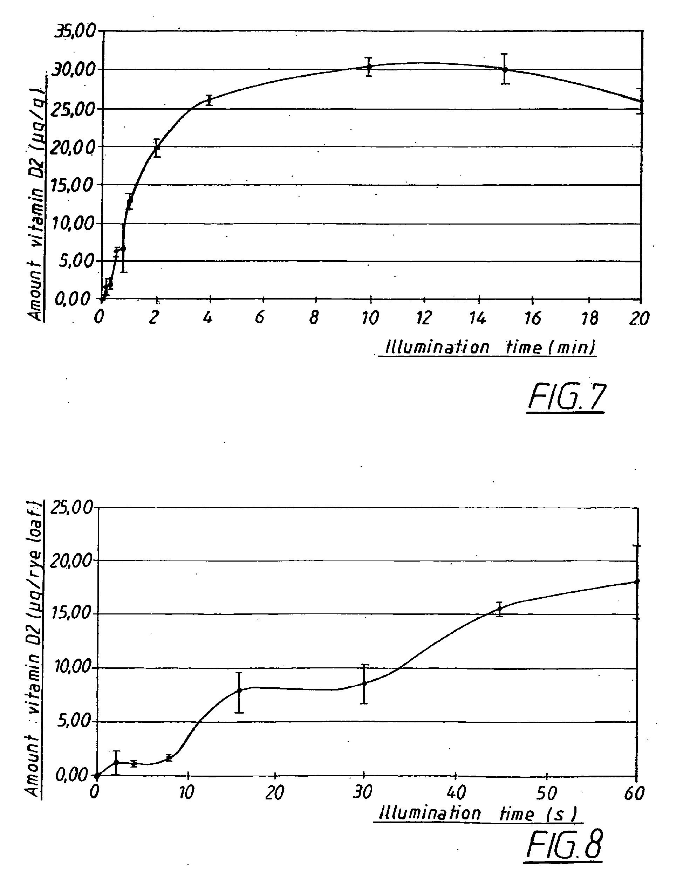

In order to verify that, regardless of the illumination time, toxic doses of vitamin D₂ are not formed, rye loaves were illuminated for extreme periods of time at 302 nm, see table 6 and Figure 7. The amount of vitamin D₂ formed reached a maximum after 12 minutes and the amount was then 31 µg per rye loaf. The acute toxic dose for vitamin D₂ is 1250 µg per day.

**Table 6. Amount of vitamin D₂ in rye loaf with different illumination times**

| Illumination time (min) | Amount of vitamin D₂ (µg per rye loaf) |
|---|---|
| 0,00 | 0,00 |
| 0,03 | 0,43 |
| 0,07 | 0,93 |
| 0,13 | 1,60 |
| 0,27 | 1,99 |
| 0,50 | 6,21 |
| 0,75 | 6,78 |
| 1,00 | 12,90 |
| 2,00 | 19,81 |
| 4,00 | 26, 11 |
| 10,00 | 30,38 |
| 15,00 | 30,10 |
| 20,00 | 25,92 |

### Example 6 (not part of the invention)

Vegetarian mince containing *Fusarium venenatum* was illuminated with ultraviolet light of 302 nm for seven different periods of time: 2 seconds, 4 seconds, 8 seconds, 16 seconds, 30 seconds, 45 seconds and 60 seconds. The distance between the lamp and the vegetarian mince was 2.5 cm. The results of the measurements are shown in table 7 and in the diagram in Figure 8.

**Table 7. Amount of vitamin D₂ in vegetarian mince illuminated with 302 nm.**

| Illumination time (s) | Amount of vitamin D₂ (µg per g) |
|---|---|
| 0 | 0,00 |
| 2 | 1,19 |
| 4 | 1,18 |
| 8 | 1,71 |
| 16 | 7,79 |
| 30 | 8,49 |
| 45 | 15,50 |
| 60 | 18,06 |

## Claims

1. Method for vitamin enrichment of foodstuffs containing ascomyceta such as yeast, **characterized in that** ergosterol in the foodstuff is transformed into vitamin D₂ through placement under an ultraviolet lamp and the illumination of the foodstuff with ultraviolet light with wavelengths between 100-400 nm and i n that the foodstuff is a bread baked from rising dough.

2. Method according to claim 1, **characterized in that** the source of ultraviolet light is placed at a distance of between 0-2 m from the foodstuff during illumination.

3. Method according to claim 1 or 2, **characterized in that** the bread is portion packed bread.

4. Method according to any of the preceding claims, **characterized i n** that the foodstuff is illuminated with ultraviolet light at a temperature of 10°C to 70°C.

5. Method according to any of the preceding claims, **characterized in that** the illumination time is 0,1-60 seconds, preferably 2-30 seconds and more preferably 3-5 seconds.

6. Method according to any of the preceding claims, **characterized in that** the illumination of the foodstuff takes place in a continuous process, whereupon the foodstuff is transported past the source of ultraviolet light at a speed adapted to achieve a predetermined dose of illumination.

## Patentansprüche

1. Verfahren zur Vitaminierung von Nahrungsmitteln, die Ascomyceten wie etwa Hefe enthalten, **dadurch gekennzeichnet, dass** Ergosterol in dem Nahrungsmittel durch die Platzierung unter einer Ultraviolettlampe und der Beleuchtung des Nahrungsmittels mit ultraviolettem Licht mit Wellenlängen zwischen 100 - 400 nm zu Vitamin D2 umgewandelt wird und dadurch, dass das Nahrungsmittel ein mit aufgehendem Teig gebackenes Brot ist.

2. Verfahren nach Anspruch 1, **dadurch gekennzeichnet, dass** die Quelle des ultravioletten Lichtes während der Beleuchtung in einem Abstand von zwischen 0 - 2 m zu dem Nahrungsmittel platziert ist.

3. Verfahren nach Anspruch 1 oder 2, **dadurch gekennzeichnet, dass** das Brot ein portionsweise abgepacktes Brot ist.

4. Verfahren nach einem der vorhergehenden Ansprüche, **dadurch gekennzeichnet, dass** das Nahrungsmittel bei einer Temperatur von 10 °C bis 70 °C mit ultraviolettem Licht beleuchtet wird.

5. Verfahren nach einem der vorhergehenden Ansprüche, **dadurch gekennzeichnet, dass** die Beleuchtungszeit 0,1 - 60 Sekunden, vorzugsweise 2 - 30 Sekunden und noch bevorzugter 3 - 5 Sekunden beträgt.

6. Verfahren nach einem der vorhergehenden Ansprüche, **dadurch gekennzeichnet, dass** die Beleuchtung des Nahrungsmittels in einem kontinuierlichen Verfahren stattfindet, wobei das Nahrungsmittel an der Quelle des ultravioletten Lichtes mit einer Geschwindigkeit vorbeitransportiert wird, die geeignet ist, eine vorgegebene Beleuchtungsdosis zu erzielen.

## Revendications

1. Procédé d'enrichissement en vitamines d'aliments contenant des ascomycètes tels que la levure, **caractérisé en ce que** l'ergostérol présent dans l'aliment est transformé en vitamine D₂ après que celui-ci a été placé sous une lampe ultraviolette et que l'aliment a été éclairé avec la lumière ultraviolette présentant des longueurs d'ondes comprises entre 100 et 400 nm et **en ce que** l'aliment est un pain préparé à partir d'une pâte à lever.

2. Procédé selon la revendication 1, **caractérisé en ce que** la source de lumière ultraviolette est placée à une distance située entre 0 et 2 m de l'aliment pendant le processus d'éclairage.

3. Procédé selon la revendication 1 ou 2, **caractérisé en ce que** le pain est un pain conditionné en portions.

4. Procédé selon l'une quelconque des revendications précédentes, **caractérisé en ce que** l'aliment est éclairé avec une lumière ultraviolette à une température comprise entre 10°C et 70°C.

5. Procédé selon l'une quelconque des revendications précédentes, **caractérisé en ce que** le temps d'éclairage est compris entre 0,1 et 60 secondes, de préférence entre 2 et 30 secondes et plus préférablement entre 3 et 5 secondes.

6. Procédé selon l'une quelconque des revendications précédentes, **caractérisé en ce que** l'éclairage de l'aliment a lieu au cours d'un processus continu, après quoi l'aliment est transporté au-delà de la source de lumière ultraviolette à une vitesse adaptée afin d'obtenir une dose prédéfinie d'éclairage.
